# EUROPEAN PATENT APPLICATION

(11) **EP 4 614 547 A1**
(43) Date of publication of application: **10.09.2025**
(21) Application number: 23884698.4
(22) Date of filing: 25.10.2023
(51) Int. Cl.: H01J 35/08, H01J 35/04, H01J 35/24, H01J 35/06, G01N 23/046, A61B 6/03

(54) **SINGLE-ELECTRON-SOURCE X-RAY TUBE, X-RAY TUBE ASSEMBLY AND CORRESPONDING CT DEVICE**

(30) Priority: 01.11.2022 CN 202211358846; 24.04.2023 CN 202310449210
(71) Applicant: Nanovision Technology (Beijing) Co., Ltd., Beijing 100094 (CN)
(72) Inventor: CUI, Zhili, Beijing 100094 (CN); XUE, Zhichao, Beijing 100094 (CN); CUI, Liang, Beijing 100094 (CN)
(74) Representative: Wang, Bo
(86) International application number: PCT/CN2023/126617
(87) International publication number: WO 2024/093766

(57) **Abstract**

A single-electron-source X-ray tube (100), an X-ray tube assembly and a corresponding CT device. The X-ray tube (100) comprises a single electron source (3) and at least two anode target surfaces (1, 5), wherein the single electron source (3) is fixed onto the middle of a die structure (10) of the X-ray tube (100), and two exposure windows are symmetrically arranged on two ends of the X-ray tube (100) and respectively correspond to the at least two anode target surfaces (1, 5); at least two gate electrodes (2, 4) are respectively arranged on electron motion paths of the single electron source (3) that faces the anode target surfaces (1, 5); gate voltages are applied to the gate electrodes (2, 4) to control the deflection of an electric field, such that the continuity and flow direction of electron streams emitted to the anode target surfaces (1, 5) are controlled, thereby realizing the output control over X-rays. The single-electron-source X-ray tube (100) solves the problem of expansion being limited by factors such as a space utilization rate and a connection mode during performing multi-source expansion on an existing X-ray tube, and improves the controllability of exposure actions for two target surfaces during an exposure process. **In** addition, the CT device which uses the single-electron-source X-ray tube (100) can expand the coverage range of X-rays, thereby facilitating the elimination of conical-angle artifact.

## Description

### BACKGROUND

### Technical Field

The disclosure relates to a single-electron source X-ray tube, and relates to an X-ray tube assembly consisting of a plurality of single-electron source X-ray tubes, and a CT device including the single-electron source X-ray tube, belonging to the technical field of radiation imaging.

### Related Art

An X-ray tube (briefly referred to as a ball tube) is a core device that generates X-rays, and is widely applied to the fields such as medical treatment, security detection, and industrial detection. During the use of the X-ray tube, electrons are accelerated by an electron source located at a cathode under a high-voltage electric field between the cathode and an anode, and then bombard an anode target surface at a high velocity, causing braking radiation to generate X-rays. At the cathode, the most used electron source is a hot cathode, which is often a filament. In recent years, a cold cathode technology has also been gradually applied.

In the prior art, an electron source of an X-ray tube is usually in one-to-one correspondence with an anode target surface. However, with the development of Computed Tomography (CT) imaging technologies, there is a growing demand for expansion of the number of X-ray sources, and new requirements are put forward in aspects of multi-source expandability, space occupation and the like of X-ray tubes. For a conventional X-ray tube employing a design of one-to-one correspondence between an electron source and an anode target surface, when expanding towards multi-source distribution, there are problems such as a relatively large occupied space range and poor expandability.

### SUMMARY

A first technical problem to be solved by the disclosure is to provide a single-electron source X-ray tube.

Another technical problem to be solved by the disclosure is to provide an X-ray tube assembly consisting of a plurality of single-electron source X-ray tubes mentioned above.

Still another technical problem to be solved by the disclosure is to provide a CT device including the single-electron source X-ray tube mentioned above.

To achieve the above-mentioned technical objectives, the disclosure adopts the following technical solutions:
According to a first aspect of embodiments of the disclosure, a single-electron source X-ray tube is provided, including a single electron source and at least two anode target surfaces, where
the single electron source is fixed in the center of a tube core structure of the X-ray tube, and two exposure windows are symmetrically disposed at two ends of the X-ray tube and are respectively corresponding to the at least two anode target surfaces;
at least two grids are respectively disposed in an electron motion path of the single electron source towards each of the anode target surfaces; and
a grid voltage is applied to the grid to control a deflection electric field to control the on-off and flow direction of an electron current directed towards the anode target surface, thereby achieving output control of X-rays.

Preferably, the single-electron source X-ray tube further includes:
a first insulated support part, disposed on an inner wall of the tube core structure of the X-ray tube; and
a second insulated support part, disposed on the inner wall of the tube core structure of the X-ray tube and opposite to the first insulated support part. One end of the second insulated support part that is far away from the first insulated support part protrudes out of an outer wall of the tube core structure of the X-ray tube and is provided with a high-voltage connection assembly for connection to an external high-voltage generator.

A clamping space is formed between the first insulated support part and the second insulated support part, and the electron source is clamped in the clamping space to be fixed in the center of the tube core structure of the X-ray tube.

Preferably, each of the anode target surfaces is grounded; and an active heat exchanger is mounted on each of the anode target surfaces for cooling the anode target surface.

Preferably, when the grid voltage is higher than a turn-off voltage, the electron current is interrupted, and the X-ray tube no longer generates X-rays.

Preferably, when the grid voltage is between the turn-off voltage and a reference voltage, the magnitude of an exposure focal spot changes as the grid voltage changes.

Preferably, the single electron source is replaced with at least two electron sources, and each electron source is in one-to-one correspondence with one anode target surface; and
a metal baffle is disposed between two adjacent electron sources, so that one electron source emits electrons towards only one anode target surface.

Preferably, the anode target surface is a fixed anode target surface or a rotating anode target surface.

According to a second aspect of the embodiments of the disclosure, an X-ray tube assembly is provided, including a plurality of single-electron source X-ray tubes mentioned above, and the plurality of single-electron source X-ray tubes are disposed side-by-side.

Preferably, the X-ray tube assembly further includes a high-voltage connection integration assembly, and the high-voltage connection integration assembly is electrically connected to each of the single-electron source X-ray tubes respectively.

According to a third aspect of the embodiments of the disclosure, a CT device is provided, including the single-electron source X-ray tube mentioned above.

Compared with the prior art, the single-electron source X-ray tube provided in the disclosure solves the problem of limited expansion of an existing X-ray tube caused by factors such as a space utilization rate and a connection manner when performing multi-source expansion, and improves the controllability of exposure actions of double target surfaces in an exposure process. On the other hand, applying the disclosure to the CT device can increase the coverage range of X-rays, thereby helping eliminate a cone-beam artifact.

### BRIEF DESCRIPTION OF THE DRAWINGS

FIG. 1 is a schematic structural diagram of a single-electron source X-ray tube in Embodiment 1 of the disclosure;
FIG. 2 is a schematic structural diagram of another single-electron source X-ray tube in Embodiment 2 of the disclosure;
FIG. 3 is a schematic structural diagram of an X-ray tube assembly in Embodiment 3 of the disclosure; and
FIG. 4 is a schematic structural diagram of a CT device including the single-electron source X-ray tube mentioned above in Embodiment 4 of the disclosure.

### DETAILED DESCRIPTION

The technical content of the disclosure is specifically described in detail below with reference to accompanying drawings and specific embodiments.

The disclosure creatively uses double target surfaces to provide two exposure windows, while breaking through the traditional design concept of one-to-one correspondence between the number of target surfaces and the number of filaments. The design that a single electron source (i.e., filament) corresponds to at least two anode target surfaces is used. Correspondingly, at least two grids are designed. By adjusting the grid voltage, electron motion paths in two directions are respectively controlled to respectively control whether two anode target surfaces generate X-rays. On the one hand, this technical solution using a single electron source and double target surfaces can make the electric field distribution symmetrical and make the electric field distribution regular and concentrated, thereby being beneficial to the insulation design of a tube core. On the other hand, the space utilization rate of the X-ray tube is improved, thereby facilitating expansion of multi-source distribution.

The single-electron source X-ray tube provided in the embodiments of the disclosure is described in detail below with reference to the accompanying drawings.

### Embodiment 1

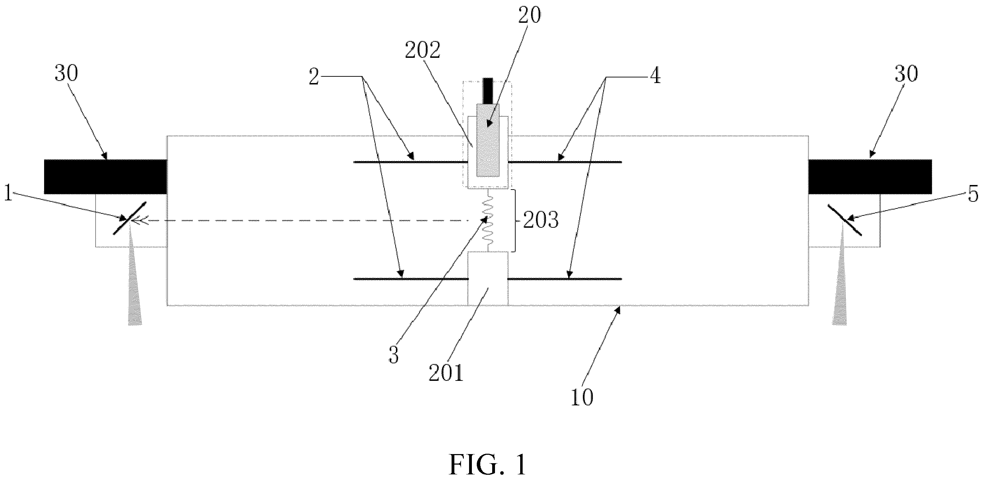

As shown in FIG. 1, in Embodiment 1 of the disclosure, a single-electron source X-ray tube includes a first anode target surface 1, a first grid 2, an electron source 3, a second grid 4, and a second anode target surface 5. The first anode target surface 1 and the second anode target surface 5 are located at left and right ends of the X-ray tube respectively, each inclined at 45°, to receive cathode electrons emitted from the electron source 3. The first grid 2, the electron source 3, and the second grid 4 are encapsulated in a tube core structure 10 of the X-ray tube. In the center of a tube core structure of the X-ray tube, the electron source 3 is fixed in the middle by designing an insulated support structure (described in detail below), and it is ensured that the electron source 3 meets the condition that electrons are emitted in two perpendicular directions (i.e., left and right directions in FIG. 1), and move to the first anode target surface 1 and the second anode target surface 5, thereby providing a reliable electron source and an electron motion path when two target disks are respectively exposed. The first grid 2 and the second grid 4 are symmetrically disposed on electron motion paths of left and right ends (or other positions) of the electron source 3 respectively. Correspondingly, two exposure windows are symmetrically disposed at left and right ends of the single-electron source X-ray tube and are respectively corresponding to the first anode target surface 1 and the second anode target surface 5. In this way, during exposure, under the action of a high-voltage electric field, the electrons generated by the electron source 3 bombard the first anode target surface 1 and the second anode target surface 5 respectively at a high velocity, causing braking radiation to generate X-rays.

Specifically, in this embodiment, a grid voltage is applied to the first grid 2 to control a deflection electric field, to control whether an electron motion path 1 (an electron motion path from the electron source 3 to the first anode target surface 1) is restrained. After the grid voltage is higher than the turn-off voltage, the electrons are completely confined, which is equivalent to interrupting the electron current, so that X-rays are no longer generated. When the grid voltage is between the turn-off voltage and the reference voltage, the deflection amplitude of the electrons can be controlled by controlling the magnitude of the grid voltage, to control the position at which the electrons bombard the first anode target surface 1, thereby controlling the magnitude of the focal spot on the first anode target surface 1, that is, changing the magnitude of the exposure focal spot. Similarly, the second grid 4 may control an electron motion path 2 (an electron motion path from the electron source 3 to the second anode target surface 5) in the same manner. Therefore, by controlling the grid voltage, on the one hand, exposure can be controlled more flexibly, and the exposure is quickly turned on (the grid voltage is adjusted to the reference voltage within a period of several microseconds), and the exposure is quickly turned off (the grid voltage is adjusted to the turn-off voltage within a period of several microseconds) by adjusting the grid voltage, so that electron beams can be reliably turned off in a kV/mA establishment process and a kV/mA turn-off process, thereby effectively reducing an ineffective dose. On the other hand, the magnitude of the exposure focal spot can be changed by adjusting the magnitude of the grid voltage of the grid to cope with different exposure requirements.

It can be understood that in this embodiment, the grid voltage of the first grid 2 and the grid voltage of the second grid 4 are independently controlled. Therefore, in a specific application, synchronous generation of X-rays or alternate generation of X-rays can be achieved by respectively controlling the grid voltages of the two grids, to adapt to different application scenarios. Specifically, in an embodiment of the disclosure, the grid voltage applied to the first grid 2 and the grid voltage applied to the second grid 4 are completely synchronous. Then under the action of the grid voltage, the electrons generated by the electron source 3 move to left and right sides respectively and bombard the first anode target surface 1 and the second anode target surface 5 at the same time, to generate X-rays on the left and right sides of the X-ray tube at the same time. In another embodiment, the grid voltage of the first grid 2 and the grid voltage of the second grid 4 are alternately higher than the turn-off voltage. When the grid voltage of the first grid 2 is higher than the turn-off voltage, the electrons on the electron motion path 1 are completely confined. In this case, the electrons on the electron motion path 2 can normally bombard the second anode target surface 5, to generate X-rays on the right side of the X-ray tube. When the grid voltage of the second grid 4 is higher than the turn-off voltage, the electrons on the electron motion path 2 are completely confined. In this case, the electrons on the electron motion path 1 can normally bombard the first anode target surface 1 to generate X-rays on the left side of the X-ray tube. Therefore, alternate generation of X-rays on the left and right sides of the X-ray tube can be achieved.

In addition, as shown in FIG. 1, the insulated support structure mentioned above specifically includes a first insulated support part 201 and a second insulated support part 202. The first insulated support part 201 is in a columnar shape (a cylinder shape or a square column shape), and is disposed on the inner wall of the tube core structure 10 of the X-ray tube. The second insulated support part 202 is also in a columnar shape (a cylinder shape or a square column shape), and is disposed on the inner wall of the tube core structure 10 of the X-ray tube and opposite to the first insulated support part 201, so that a clamping space 203 is formed between the first insulated support part and the second insulated support part. The electron source 3 (that is, filament) is clamped in the clamping space 203, so that the electron source 3 is stably clamped in the center of the tube core structure of the X-ray tube by the first insulated support part 201 and the second insulated support part 202. In addition, one end (that is, upper end in FIG. 1) of the second insulated support part 202 that is away from the electron source 3 protrudes out of the outer wall of the tube core structure 10 of the X-ray tube. A high-voltage connection assembly 20 is mounted at the upper end of the second insulated support part 202. This allows connection to an external high-voltage generator through the high-voltage connection assembly 20 to apply high voltages to the first grid 2, the electron source 3, and the second grid 4.

It should be noted that in the embodiment shown in FIG. 1, a fixed anode target disk (that is, fixed target disk) is used as an example, but the X-ray tube provided in this embodiment of the disclosure may also be applied to a rotating target disk structure. In addition, in the foregoing embodiment, the electron source 3 uses a filament, but the disclosure is not limited thereto. Other electron sources, including but not limited to, a carbon nanotube electron source, may also be applied in the disclosure.

In the foregoing embodiment, preferably, a design solution in which the anode is grounded is used. Moreover, an active heat exchanger 30 is mounted on each of the anode target surfaces, so that no matter whether a fixed target disk structure or a rotating target disk structure is used, the heat can be conducted to the active heat exchanger 30 to cool the anode, thereby effectively solving the problem of heat dissipation of the anode target surface, and improving the service power of the tube core in the same case.

### Embodiment 2

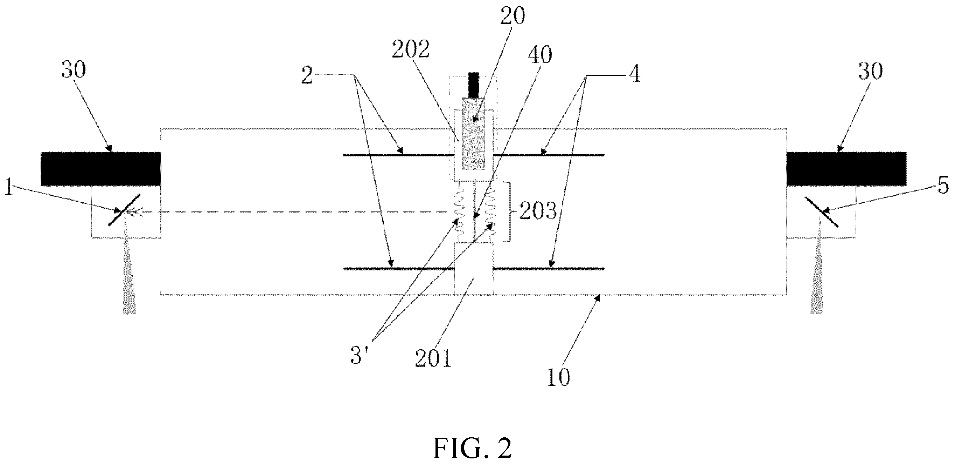

As shown in FIG. 2, based on Embodiment 1, Embodiment 2 of the disclosure provides another single-electron source X-ray tube, including a first anode target surface 1, a first grid 2, an electron source 3', a second grid 4, and a second anode target surface 5. The difference between this embodiment and Embodiment 1 lies in that the electron sources 3' has a different structural form.

In this embodiment, at least two electron sources 3' are provided, and each electron source is in one-to-one correspondence with one anode target surface. Specifically, two electron sources 3' are provided and are respectively corresponding to the first anode target surface 1 and the second anode target surface 5. Moreover, a metal baffle 40 is disposed between the two electron sources, to prevent electrons from moving towards the opposite side by the metal baffle 40. In this way, one electron source only emits electrons towards one anode target surface (i.e., the electron source on the left side only emits electrons towards the first anode target surface 1, and the electron source on the right side only emits electrons towards the second anode target surface 5). It can be seen from the foregoing description that although the electron sources 3' are a plurality of electron sources in form, the working mode of each electron source is essentially the same as that of the single-electron source X-ray tube in Embodiment 1. Therefore, this embodiment is essentially still a single-electron source X-ray tube in another form.

It can be understood that in this embodiment, the structural forms of the electron sources 3' and the anode target surfaces are similar to the conventional design concept of one-to-one correspondence between the number of target surfaces and the number of filaments. In addition, the remaining structures of this embodiment are the same as those of Embodiment 1, and will not be repeated here.

### Embodiment 3

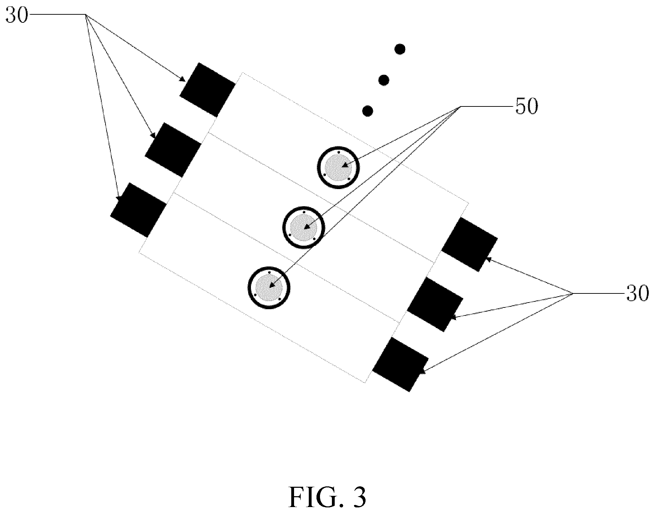

As shown in FIG. 3, based on Embodiment 1, Embodiment 3 of the disclosure provides an X-ray tube assembly, including a plurality of single-electron source X-ray tubes in Embodiment 1 or Embodiment 2.

Specifically, by arranging two single-electron source X-ray tubes side-by-side, the X-ray tube assembly may be expanded into a structural form with double sources and four target surfaces; and by arranging three single-electron source X-ray tubes side-by-side, the X-ray tube assembly may be expanded into a structural form with third sources and six target surfaces, and so on. In this way, adaptive multi-source expansion may be performed on the X-ray tube assembly according to exposure requirements.

In addition, in this embodiment, a high-voltage connection integration assembly 50 is disposed on the X-ray tube assembly, so that the high-voltage connection integration assembly is electrically connected to each single-electron source X-ray tube. It can be understood that the high-voltage connection integration assembly 50 may be a combination of two, three, or more high-voltage connection assemblies 20 each having two light sources. Therefore, a plurality of high-voltage connection assemblies 20 may be formed into an integrated structure, thereby improving the convenience of connection between the X-ray tube assembly and the high-voltage generator, and simplifying the overall circuit structure.

### Embodiment 4

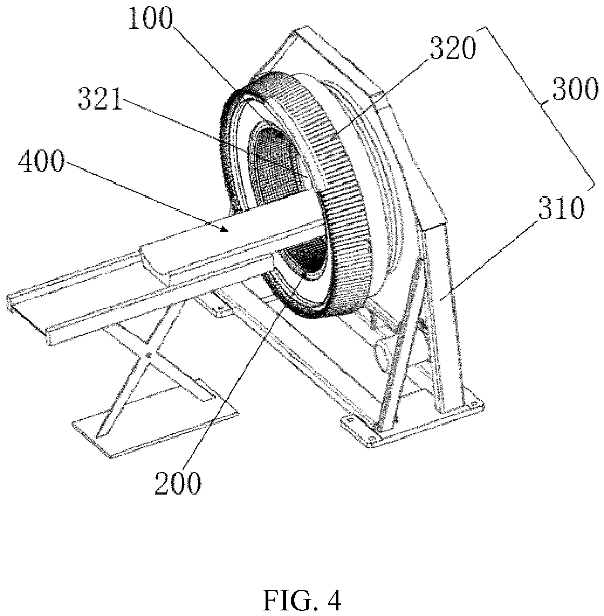

As shown in FIG. 4, based on Embodiment 1, Embodiment 4 of the disclosure provides a CT device including the single-electron source X-ray tube mentioned above.

Specifically, the CT device includes a single-electron source X-ray tube 100, a CT detection module 200, and a scanning gantry 300. The scanning gantry 300 may include a fixed part 310 and a rotating part 320 (there is no rotating part in a static CT imaging device, and rotation switching of an X-ray projection position is achieved by means of cooperation of the X-ray tube and the CT detection module). The single-electron source X-ray tube 100 and the CT detection module 200 are disposed on the rotating part 320, and a middle aperture 321 for a scanning bed to pass through is disposed in the middle of the rotating part. The scanning bed 400 and the scanning gantry 300 are correspondingly disposed. The scanning bed 400 is configured to carry a patient and place the patient in the middle aperture 321 of the rotating part of the scanning gantry 300 for checking. After the patient is moved to a preset scanning position, the single-electron source X-ray tube 100 on one side of the patient emits X-rays. After the passing through the body of the patient, the X-rays are received by the CT detection module 200 on the other side. After receiving the X-rays, the CT detection module 200 converts the X-rays into visible light, an image is formed according to a preset program, and then, image information is transmitted to a display device (not shown) for display.

Compared with the prior art, the single-electron source X-ray tube and X-ray tube assembly provided in the disclosure solve the problem of limited expansion of an existing X-ray tube caused by factors such as a space utilization rate and a connection manner when performing multi-source expansion, and improve the controllability of exposure actions of double target surfaces in an exposure process. On the other hand, applying the single-electron source X-ray tube to the CT device can increase the coverage range of X-rays, thereby helping eliminate a cone-beam artifact.

The single-electron source X-ray tube, X-ray tube assembly and corresponding CT device provided in the disclosure are described in detail above. Any obvious change made by those of ordinary skill in the art to the disclosure without departing from the essence of the disclosure shall constitute an infringement of the patent right of the disclosure and shall take the corresponding legal responsibility.

## Claims

1. A single-electron source X-ray tube, comprising a single electron source and at least two anode target surfaces, wherein
the single electron source is fixed in the center of a tube core structure of the X-ray tube, and two exposure windows are symmetrically disposed at two ends of the X-ray tube and are respectively corresponding to the at least two anode target surfaces;
at least two grids are respectively disposed in an electron motion path of the single electron source towards each of the anode target surfaces; and
a grid voltage is applied to the grid to control a deflection electric field to control the on-off and flow direction of an electron current directed towards the anode target surface, thereby achieving output control of X-rays.

2. The single-electron source X-ray tube according to claim 1, further comprising:
a first insulated support part, disposed on an inner wall of the tube core structure of the X-ray tube; and
a second insulated support part, disposed on the inner wall of the tube core structure of the X-ray tube and opposite to the first insulated support part, wherein one end of the second insulated support part that is far away from the first insulated support part protrudes out of an outer wall of the tube core structure of the X-ray tube and is provided with a high-voltage connection assembly for connection to an external high-voltage generator; and
a clamping space is formed between the first insulated support part and the second insulated support part, and the electron source is clamped in the clamping space to be fixed in the center of the tube core structure of the X-ray tube.

3. The single-electron source X-ray tube according to claim 2, wherein
each of the anode target surfaces is grounded; and an active heat exchanger is mounted on each of the anode target surfaces for cooling the anode target surface.

4. The single-electron source X-ray tube according to claim 1, wherein
when the grid voltage is higher than a turn-off voltage, the electron current is interrupted, and the X-ray tube no longer generates X-rays.

5. The single-electron source X-ray tube according to claim 1, wherein
when the grid voltage is between the turn-off voltage and a reference voltage, the magnitude of an exposure focal spot changes as the grid voltage changes.

6. The single-electron source X-ray tube according to claim 1, wherein
the single electron source is replaced with at least two electron sources, and each electron source is in one-to-one correspondence with one anode target surface; and
a metal baffle is disposed between two adjacent electron sources, so that one electron source emits electrons towards only one anode target surface.

7. The single-electron source X-ray tube according to any one of claims 1 to 6, wherein the anode target surface is a fixed anode target surface or a rotating anode target surface.

8. An X-ray tube assembly, comprising a plurality of single-electron source X-ray tubes according to any one of claims 1 to 7, wherein the plurality of single-electron source X-ray tubes are disposed side-by-side.

9. The X-ray tube assembly according to claim 8, further comprising a high-voltage connection integration assembly, wherein the high-voltage connection integration assembly is electrically connected to each of the single-electron source X-ray tubes.

10. A CT device, comprising the single-electron source X-ray tube according to any one of claims 1 to 7.
